# EUROPEAN PATENT APPLICATION

(11) **EP 1 958 828 A2**
(43) Date of publication of application: **20.08.2008**
(21) Application number: 08151059.6
(22) Date of filing: 05.02.2008
(51) Int. Cl.: B60R 21/0134

(54) **Low cost method of vehicle pre-crash detection**

(30) Priority: 14.02.2007 US 706018
(71) Applicant: Delphi Technologies, Inc., Troy, Michigan 48007 (US)
(72) Inventor: Littlejohn, Deron C., West Bloomfield, MI 48324 (US); Kuo, Ching C., South Lyon, MI 48178 (US); Amberkar, Sanket S., Ann Arbor, MI 48108 (US)
(74) Representative: Denton, Michael John

(57) **Abstract**

A method for actuating a controlled device in response to a pre-crash condition of a vehicle, wherein the vehicle includes at least two sensors each of which is capable of generating a signal, wherein the method includes the steps of monitoring the signals, determining a panic index based upon the signals and, when the determined panic index exceeds a predetermined threshold value, actuating the controlled device.

## Description

### Technical Field

The present application relates to control systems and methods and, more particularly, to systems and methods for detecting and responding to crash and pre-crash conditions.

### Background of the Invention

Seatbelt pretensioners have been developed to automatically apply a force to a seatbelt to restrain the vehicle occupant in the event of a crash. The application of force to the seatbelt may remove any slack in the seatbelt and may help to properly position the vehicle occupant in the seat, thereby maximizing the effectiveness of the seatbelt and any secondary safety restraints (e.g., airbags).

Original seatbelt pretensioners typically included a pyrotechnic device that was actuated when a crash condition was detected. However, such pretensioners were one-time-use devices. Recently, controllable, resettable seatbelt pretensioners have been developed that may be operated multiple times without reloading or resetting. For example, a controllable, resettable device may use a small motor to remove seatbelt slack.

Given that such devices are controllable, there is an opportunity to activate such devices in conditions prior to a crash. Furthermore, other resettable countermeasures (e.g., controlled side seat bolsters) may be activated upon the detection of a crash or pre-crash condition.

Accordingly, there is a need for a low cost system and method for detecting and responding to a crash or pre-crash condition.

### Summary of the Invention

In one aspect, a method is provided for actuating a controlled device in response to a pre-crash condition of a vehicle, wherein the vehicle includes at least two sensors each of which is capable of generating a signal. The method may include the steps of monitoring the signals, determining a panic index based upon the signals and, when the determined panic index exceeds a predetermined threshold value, actuating the controlled device.

In another aspect, a pre-crash detection system for a vehicle may include a processor, at least two sensors in communication with the processor, wherein a first one of the sensors is adapted to communicate a first signal to the processor, the first signal being indicative of a braking status of the vehicle, a steering status of the vehicle or a vehicle status of the vehicle, and wherein a second one of the sensors is adapted to communicate a second signal to the processor, the second signal being indicative of the braking status of the vehicle, the steering status of the vehicle or the vehicle status of the vehicle, and a controlled device in communication with the processor, wherein the processor is adapted to generate a panic index based at least upon the first and second signals and communicate a control signal to the controlled device based upon the panic index.

Other aspects of the disclosed pre-crash detection system will become apparent from the following description, the accompanying drawings and the appended claims.

### Brief Description of the Drawings

Fig. 1 is a schematic view of a vehicle embodying an aspect of the disclosed pre-crash detection system;

Fig. 2 is a flow diagram illustrating one aspect of the disclosed pre-crash detection system;

Fig. 3 is a detailed view of one aspect of the "Monitor Signals" step and one aspect of the "Determine Panic Index" step of the system of Fig. 2;

Fig. 4 is a detailed view of the system of Fig. 2;

Fig. 5 is a graphical illustration of a first example of a panic index determination according to the system of claim 2; and

Fig. 6 is a graphical illustration of a second example of a panic index determination according to the system of claim 2.

### Description of the Preferred Embodiment

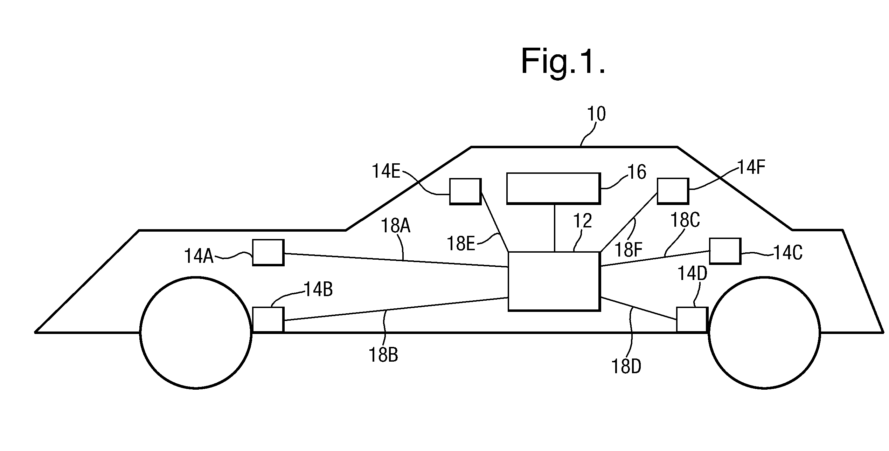

Referring to Fig. 1, a vehicle 10 provided with the disclosed pre-crash detection system may include a controller or processor 12, a plurality of sensors 14A, 14B, 14C, 14D, 14E, 14F and one or more controlled devices 16. The sensors 14A, 14B, 14C, 14D, 14E, 14F may be in communication with the processor 12 by way of communications lines 18A, 18B, 18C, 18D, 18E, 18F, which may be hard-wired, wireless or the like, to provide the processor 12 with data from the sensors 14A, 14B, 14C, 14D, 14E, 14F. The controlled device 16 may be any device or system capable of being controlled, such as a seatbelt pretensioner, a controlled side seat bolsters or the like.

Thus, the processor 12 may control the controlled device 16 based upon the signals received from the sensors 14A, 14B, 14C, 14D, 14E, 14F in accordance with the disclosed pre-crash detection system.

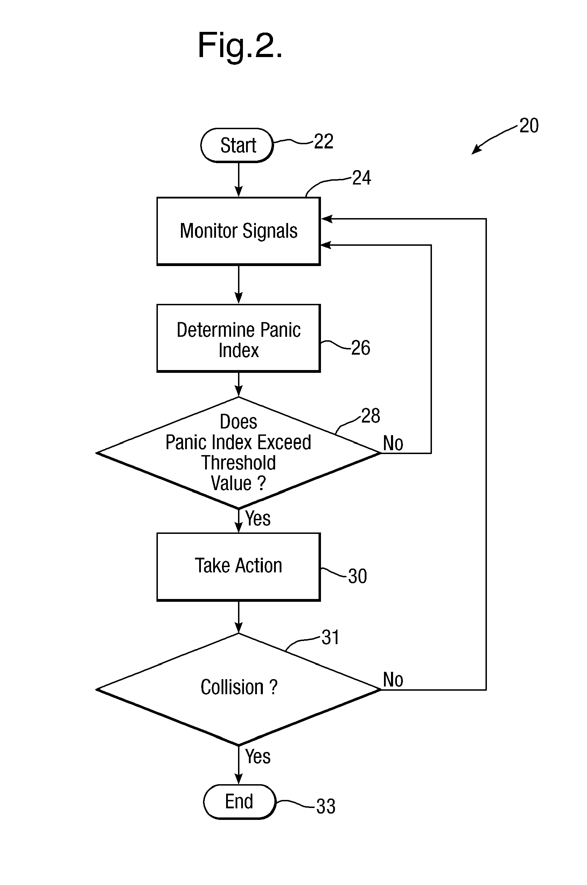

Referring to Fig. 2, one aspect of the disclosed pre-crash detection system, generally designated 20, may begin at block 22. At block 24, the system 20 may monitor signals received from the sensors 14A, 14B, 14C, 14D, 14E, 14F (Fig. 1). Based upon the monitored signals, the system 20 may determine a panic index, as shown at block 26. At block 28 the system 20 may determine whether the panic index determined at block 26 meets or exceeds a predetermined threshold value. If the determined panic index (block 26) does not meet or exceed the predetermined threshold value, the system 20 may return to block 24 to continue monitoring the signals from the sensors 14A, 14B, 14C, 14D, 14E, 14F (Fig. 1). If the determined panic index (block 26) does meet or exceed the predetermined threshold value, the system 20 may proceed to block 30 and may take any number of actions in response thereto. Optionally, after taking action (block 30), at block 31 the system 20 may determine whether a collision occurred and, if no collision occurred, the system 20 may continue monitoring signals at block 24. However, if a collision did occur, the system 20 may come to an end at block 33.

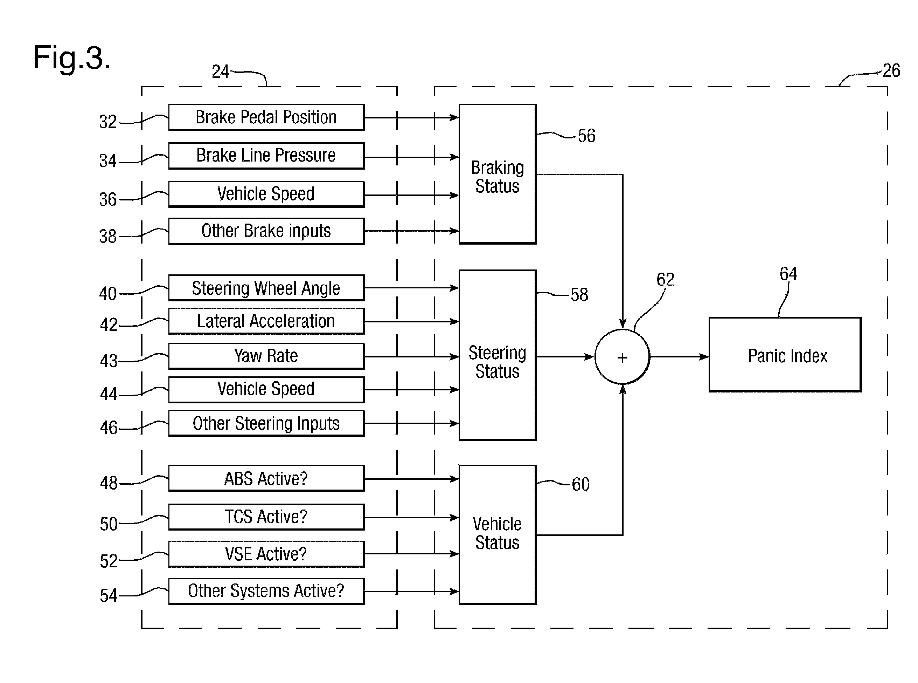

Referring to Fig. 3, the signal monitoring step of block 24 may include monitoring various input signals 32, 34, 36, 38, 40, 42, 43, 44, 46, 48, 50, 52, 54 received from the sensors 14A, 14B, 14C, 14D, 14E, 14F (Fig. 1) on the vehicle 10 (Fig. 1). Those skilled in the art will appreciate that number and variety of input signals may be used to determine a panic index indicative of a crash or pre-crash state of the vehicle 10. In particular, those skilled in the art will appreciate that any signals monitored by the vehicle 10 having a nexus with the dynamic state of the vehicle and the stability and performance of the vehicle may be useful inputs for determining a panic index.

For example, as shown in Fig. 3, signals indicative of the brake pedal position 32, brake line pressure 34, vehicle speed 36 and/or other brake inputs 38 may be used to determine a braking status 56 of the vehicle 10. Signals indicative of the steering wheel angle 40 (or rate of change of steering wheel angle), lateral acceleration 42, yaw rate 43, vehicle speed 44 and/or other steering inputs 46 (e.g., yaw rate and the like) may be used to determine a steering status 58 of the vehicle 10. Signals indicative of the status of the automatic braking system (ABS) 48, the traction control system (TCS) 50, the vehicle stability enhancement system (VSE) 52 and/or other vehicle control and monitoring systems 54 may be used to determine a vehicle status 60 of the vehicle 10.

Still referring to Fig. 3, at block 26, based upon the input signals 32, 34, 36, 38, 40, 42, 43, 44, 46, 48, 50, 52, 54 the system 20 may continuously determine a panic index 64 by summing (see e.g. summation block 62) the braking status 56, the steering status 58 and vehicle status 60 of the vehicle 10. However, those skilled in the art will appreciate that the system 20 may sum the values of the input signals 32, 34, 36, 38, 40, 42, 43, 44, 46, 48, 50, 52, 54 directly. The determination and any necessary calculations may be performed by the processor 12 (Fig. 1). The panic index 64, which may be a numerical value, may reflect the totality of the data provided to the processor 12 by the vehicle sensors 14A, 14B, 14C, 14D, 14E, 14F (Fig.1).

In one aspect, each input signal 32, 34, 36, 38, 40, 42, 43, 44, 46, 48, 50, 52, 54 may have a numerical value (e.g., a magnitude or rate of change) indicative of the severity of the signal. For example, a high rate of change of brake pedal position (e.g., 20 feet per second or greater) may be indicative of a panic braking status 56; a high rate of change of steering wheel angle (e.g., 90 degrees per second or greater) may be indicative of a panic steering status 58; and an ABS active signal (e.g., a digital 1 rather than a digital 0 when the ABS is inactive) may be indicative of a panic vehicle status 60. The summation of these three panic inputs, when properly weighted or otherwise formulated, may result in a panic index of 9, for example, which may be a high panic index.

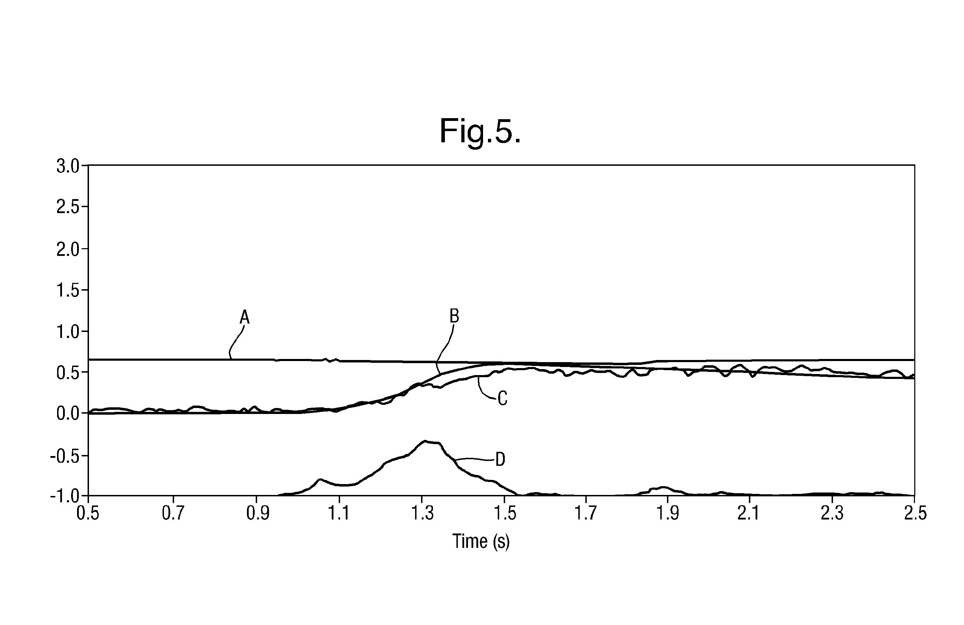

Referring to Fig. 5, the panic index versus time for an example vehicle 10 is shown by line **D**, which is a weighted sum of the vehicle speed (kph) shown by line A, the vehicle master cylinder pressure (psi) shown by line **B** and the vehicle deceleration (g) shown by line **C.** At about t=0.9 seconds, an event occurs that causes the vehicle speed to drop and the vehicle deceleration and master cylinder pressure to increase. The result is a panic index peak of about minus 0.2 at about t=1.3 seconds, which may not met or exceed the predetermined threshold value of the system and, therefore, no responsive action may be taken.

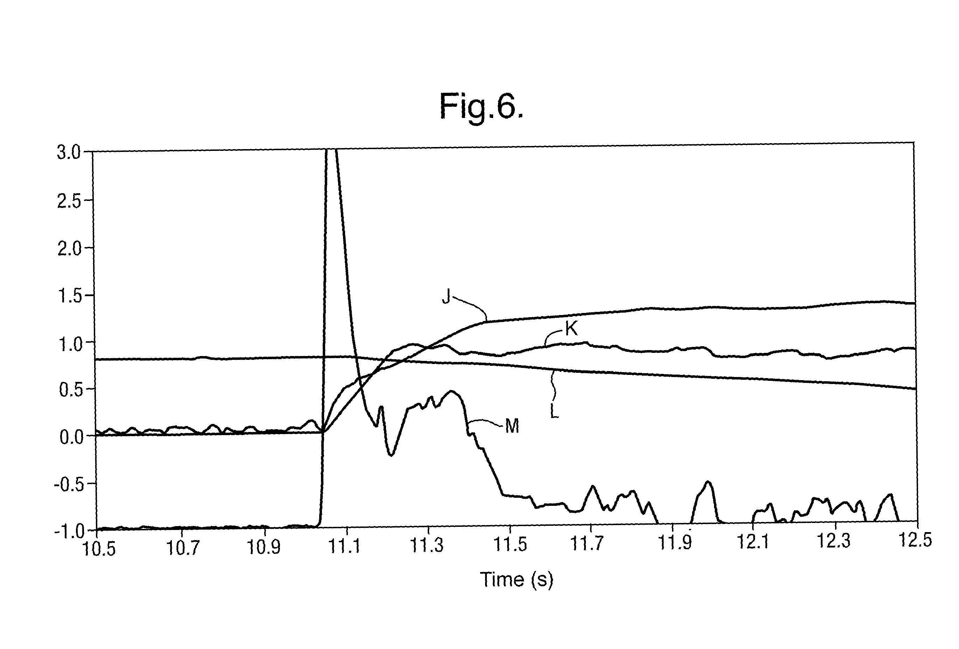

Referring to Fig. 6, the panic index versus time for an example vehicle 10 is shown by line **M,** which is a weighted sum of the vehicle speed (kph) shown by line **L,** the master cylinder pressure (psi) shown by line J and the vehicle deceleration (g) shown by line **K.** At about t=11.0 seconds, an event occurs that causes the vehicle speed to drop and the vehicle deceleration and master cylinder pressure to increase rapidly. The result is a panic index in excess of 3.0 between about t=11.0 and 11.2 seconds, which may result in the controller 12 of the vehicle 10 actuating the controlled device 16.

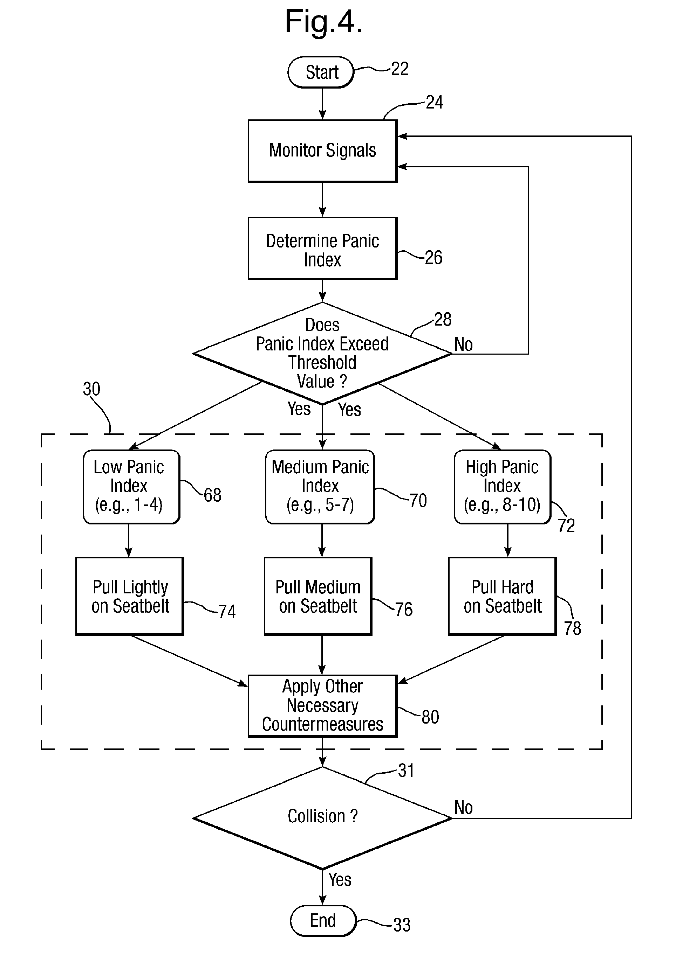

Referring to Fig. 4, once the panic index 64 (Fig. 3) has been determined, and if the panic index 64 meets or exceeds a predetermined threshold value, as indicated in block 28, the system 20 may initiate an action at block 30. By initiating an action, the system 20 may prompt the processor 12 to send a control signal to the controlled device 16 such that the controlled device responds accordingly. For example, the controlled device 16 may be a seatbelt pretensioner and, based upon the value of the panic index 64, the processor 12 may actuate the seatbelt pretensioner accordingly.

In one aspect, the type of action taken at block 30 may be dependent upon the numerical value of the panic index 64 (Fig. 3) determined at any given moment. In another aspect, various ranges of the panic index 64 may have a corresponding action associated therewith.

Referring to Fig. 4 for example, if the panic index 68 is determined to be a low value (e.g., 1-4 arbitrary units), as shown by block 68, the processor 12 may command the controlled device 16 to initiating a light pull of the seatbelt, as shown by block 74, and, optionally, to apply any other necessary countermeasures to prepare the vehicle 10 and its occupants for a possible collision, as shown by block 80. If the panic index 68 is determined to be a medium value (e.g., 5-7 arbitrary units), as shown by block 70, the processor 12 may command the controlled device 16 to initiating a medium pull of the seatbelt, as shown by block 76, and, optionally, to apply any other necessary countermeasures (block 80). If the panic index 68 is determined to be a high value (e.g., 8-10 arbitrary units), as shown by block 72, the processor 12 may command the controlled device 16 to initiating a hard pull of the seatbelt, as shown by block 78, and, optionally, to apply any other necessary countermeasures (block 80).

Thus, the disclosed system 20 may provide a vehicle with the ability to initiate a proper response (e.g., a light pull 74, a medium pull 76 and a hard pull 78) to a crash or pre-crash condition based upon the value of the determined panic index.

At block 31 the system 20 may determine whether a collision has occurred based upon the signals from the sensors 14A, 14B, 14C, 14D, 14E, 14F. If no collision has occurred, the system may return to block 24 and continue to monitor the signals. However, if a collision has occurred, the system 20 may reach an end point at block 33.

The system 10 may also include an optional timing mechanism (not shown), which may be used to delay the transfer of signals to and from the controller or processor 12 for some period of time to coincide actions and countermeasures such that they occur at the same point in time or at staggered points in time.

Although various aspects of the disclosed pre-crash detection system have been shown and described, modifications may occur to those skilled in the art upon reading the specification. The present application includes such modifications and is limited only by the scope of the claims.

## Claims

1. A method for actuating a controlled device in response to a pre-crash condition of a vehicle, said vehicle including at least two sensors each of which is capable of generating a signal, said method comprising the steps of:
monitoring said signals;
determining a panic index based upon said signals; and
when said determined panic index exceeds a predetermined threshold value, actuating said controlled device.

2. The method of claim 1 wherein said controlled device is a seatbelt pretensioner.

3. The method of claim 1 wherein said controlled device is a side seat bolster.

4. The method of claim 1 further comprising the step of determining whether a collision has occurred.

5. The method of claim 4 wherein, when no collision has occurred, said monitoring step is continued.

6. The method of claim 1 wherein at least one of said signals is indicative of a braking status of said vehicle, at least one of said signals is indicative of a steering status of said vehicle and at least one of said signals is indicative of a vehicle status of said vehicle.

7. The method of claim 6 wherein said signal indicative of said braking status is at least one of a brake pedal position signal, a vehicle speed signal and brake line pressure signal.

8. The method of claim 6 wherein said signal indicative of said steering status is at least one of a steering wheel angle signal, a lateral acceleration signal, a yaw rate signal and a vehicle speed signal.

9. The method of claim 6 wherein said signal indicative of said vehicle status is at least one of automatic braking system signal, a traction control system signal and a vehicle stability enhancement signal.

10. The method of claim 1 wherein at least one of said signals is indicative of a braking status of said vehicle and at least one of said signals is indicative of a steering status of said vehicle.

11. The method of claim 1 wherein at least one of said signals is indicative of a braking status of said vehicle and at least one of said signals is indicative of a vehicle status of said vehicle.

12. The method of claim 1 wherein at least one of said signals is indicative of a steering status of said vehicle and at least one of said signals is indicative of a vehicle status of said vehicle.

13. The method of claim 1 wherein said panic index is a weighted summation of said signals.

14. The method of claim 1 wherein said panic index is a weighted summation of at least a braking status signal, a steering status signal and a vehicle status signal.

15. A pre-crash detection system for a vehicle comprising:
a processor;
at least two sensors in communication with said processor, wherein a first one of said sensors is adapted to communicate a first signal to said processor, said first signal being indicative of at least one of a braking status of said vehicle, a steering status of said vehicle and a vehicle status of said vehicle, and wherein a second one of said sensors is adapted to communicate a second signal to said processor, said second signal being indicative of at least one of said braking status of said vehicle, said steering status of said vehicle and said vehicle status of said vehicle; and
a controlled device in communication with said processor,
wherein said processor is adapted to generate a panic index based at least upon said first and said second signals and communicate a control signal to said controlled device based upon said panic index.

16. The system of claim 15 wherein said first signal is indicative of said braking status of said vehicle and said second signal is indicative of said steering status of said vehicle.

17. The system of claim 15 wherein a third one of said sensors is adapted to communicate a third signal to said processor, said third signal being indicative of at least one of said braking status of said vehicle, said steering status of said vehicle and said vehicle status of said vehicle, and wherein said processor is adapted to generate a panic index based at least upon said first, said second and said third signals.

18. The system of claim 17 wherein said first signal is indicative of said braking status of said vehicle, said second signal is indicative of said steering status of said vehicle and said third signal is indicative of said vehicle status of said vehicle.

19. The system of claim 15 wherein said controlled device is a seatbelt pretensioner.

20. The system of claim 15 wherein said controlled device is a side seat bolster.
